# EUROPÄISCHE PATENTANMELDUNG

(11) **EP 2 206 636 A1**
(43) Veröffentlichungstag der Anmeldung: **14.07.2010**
(21) Anmeldenummer: 09150182.5
(22) Anmeldetag: 07.01.2009
(51) Int. Cl.: B62B 1/10, B65H 75/14, B65H 75/20, E02B 3/10

(54) **Vorrichtung zum Aufwickeln und Halten eines Dämmelements**

(71) Anmelder: Acquaalta Schutzsysteme GmbH, 6330 Cham 1 (CH)
(72) Erfinder: Sager, Bruno, CH-6330 Cham (CH)
(74) Vertreter: Rutz & Partner

(57) **Zusammenfassung**

Die Vorrichtung (1), die dem Aufwickeln und Halten eines schlauchförmigen Dämmelements (2) dient, weist zwei Seitenwände (11) auf, die durch ein Verbindungselement (120) miteinander verbunden sind. Erfindungsgemäss weisen die Seitenwände (11) und das einteilige oder mehrteilige Verbindungselement (120) je eine Rechteckform auf, wobei das Verbindungselement (120) senkrecht zu den beiden Seitenwänden (11) steht und parallel zu einem Rand oder Randelement (111) der Seitenwände (11) ausgerichtet ist.
Zudem sind verschiedene Ausführungsarten eines Transportkarrens (3,4,5) für die erfindungsgemäße Vorrichtung (1) offenbart.

## Beschreibung

Die Erfindung betrifft eine Vorrichtung zum Aufwickeln und Halten eines schlauchförmigen Dämmelements nach dem Oberbegriff des Patentanspruchs 1.

Die Bedrohung durch Hochwasser und Überschwemmungen an Küsten und Flüssen ist in den letzten Jahren stetig gestiegen. Durch rasche und intensive Klimawechsel kommt es oft zu Regenfällen mit hohen Niederschlagsmengen. Verschiedene Wettereffekte können sich zudem unvorteilhaft überlagern. Beispielsweise führen Perioden mit hohen Temperaturen im Frühjahr zur Schmelze von Schnee und Eis, wodurch die Pegel von Flüssen und Seen ansteigen. Folgt anschliessend eine Schlechtwetterperiode mit intensiven Regenfällen, so werden die vorgesehenen Schutzbauten gegen Hochwasser rasch überfordert. Die Optimierung der Schutzbauten ist hingegen mit hohen Kosten verbunden und kann Schadensereignisse trotzdem nicht ausschliessen. Sofern das Hochwasser hingegen in Gebäude eindringt, so ist mit hohen Schäden zu rechnen.

Zur Erstellung von Barrieren, beispielsweise mittels Sandsäcken und Erdaufschüttungen, verbleibt in Katastrophensituationen hingegen zumeist keine Zeit. Ferner ist die Erstellung von solchen Barrieren mit extrem hohem Arbeits- und Materialaufwand verbunden. Dabei stellen sich insbesondere auch logistische Probleme hinsichtlich der Bereitstellung der Materialien am jeweiligen Einsatzort.

Zur Vermeidung dieser Nachteile werden daher Kunststoffschläuche mit entsprechend grossen Abmessungen verwendet, die mit relativ geringem Aufwand zum Einsatzort transportiert und dort mit Wasser gefüllt werden können.

Ein schlauchförmiges Dämmelement dieser Art ist beispielsweise aus der DE 41 00 889 A1 bekannt.

Trotz dem wesentlichen Fortschritt, der mit solchen schlauchförmigen Dämmelementen erzielt wurde, verbleiben aus der Sicht des Anwenders verschiedene noch immer wichtige Probleme.

Einerseits ist zu beachten, dass die schlauchförmigen Dämmelemente auch ohne Wasserfüllung ein relativ hohes Gewicht aufweisen, weshalb der Transport der Dämmelemente am Einsatzort, insbesondere über kurze Distanzen, die nicht mittels eines Kraftfahrzeugs überwunden werden können, oft Schwierigkeiten bereitet.

Weiterhin sind das Ausrollen und insbesondere das Aufwickeln der Dämmelemente oft mit erheblichen Schwierigkeiten verbunden.

In der DE 41 00 889 A1 wird die Verwendung eines rollenförmigen Haspels empfohlen, von dem das schlauchförmige Dämmelement abgerollt wird. Dabei ist stets darauf zu achten, dass sich der rollenförmige Haspel nicht verselbstständigt. Besonders schwierig ist auch das Aufrollen des Dämmelements, weil der rollenförmige Haspel stets die Tendenz aufweist, wieder zurück zu rollen. Typischerweise versucht der Anwender, das schlauchförmige Dämmelement auszurichten und aufzurollen. Kaum ist eine Lage gewickelt, neigt der Haspel dazu, wieder zurück zu drehen.

Nachteilig ist ferner, dass die einzelnen Windungslagen beim Aufwickeln typischerweise nicht gleichmässig ausgerichtet sind und nicht eng aufeinander liegen. Aufgrund der geringen Dichte kann daher nur relativ wenig Dämmmaterial auf diesen runden Haspel aufgewickelt werden. Zudem erfordert der Haspel selbst viel Raum und kann daher nur mit Schwierigkeiten transportiert und gelagert werden. Einerseits ist daher die Lagendichte auf dem rollenförmigen Haspel ungenügend. Andererseits nimmt der rollenförmige Haspel selbst viel Raum in Anspruch.

Der vorliegenden Erfindung liegt daher die Aufgabe zugrunde, eine verbesserte Vorrichtung zum Aufwickeln und Halten eines schlauchförmigen Dämmelements zu schaffen.

Insbesondere ist eine Vorrichtung zu schaffen, welche erlaubt, das schlauchförmige Dämmelement mit geringem Aufwand abzurollen und wieder aufzuwickeln. Das Aufwickeln des Dämmelements soll dabei mit einer hohen Lagendichte und hoher Regelmässigkeit einfach ausgeführt werden können.

Die Vorrichtung soll zudem einfach transportierbar sein und raumsparend gelagert werden können.

Diese Aufgabe wird mit einer Vorrichtung gelöst, welche die in Anspruch 1 angegebenen Merkmale aufweist. Vorteilhafte Ausgestaltungen der Erfindung sind in weiteren Ansprüchen angegeben.

Die Vorrichtung, die dem Aufwickeln und Halten eines schlauchförmigen Dämmelements dient, weist zwei Seitenwände auf, die durch ein Verbindungselement miteinander verbunden sind. Erfindungsgemäss weisen die Seitenwände und das einteilige oder mehrteilige Verbindungselement je eine Rechteckform auf, wobei das Verbindungselement senkrecht zu den beiden Seitenwänden steht und parallel zu einem Rand oder Randelement der Seitenwände ausgerichtet ist.

Die Vorrichtung weist daher zwei dominante Ruhelagen auf, die erreicht werden, wenn die zumindest annähernd rechteckigen Seitenwände mit ihren Seiten auf dem Boden ruhen und das Verbindungselement parallel zum Boden ausgerichtet ist. In dieser Lage wird nur Kraft, jedoch praktisch kein Drehmoment auf die Vorrichtung ausgeübt, welche zu einer unerwünschten Drehung führen könnte. Damit die Vorrichtung durch die Kraft nicht leicht weggezogen werden kann, sind die Ränder der Seitenwände vorzugsweise uneben ausgeführt, beispielsweise mit Ecken und Kanten versehen. Sofern das schlauchförmige Dämmelement auf- oder abgewickelt wird, so sind daher schrittweise Drehungen um 90° möglich, wonach jeweils ein nahezu stabiler Zustand erreicht wird. Eine Verselbstständigung der Vorrichtung ist daher ausgeschlossen. Der Anwender ist in der Lage, einen gewünschten Anteil des schlauchförmigen Dämmelements auf- oder abzurollen, ohne sich dann weiter um die Vorrichtung zu kümmern.

Die Vorrichtung kann präzise zum schlauchförmigen Dämmelement ausgerichtet werden. Ein beständiges seitliches Drehen, wie dies beim rollenförmigen Haspel auftritt, wird vermieden. Das schlauchförmige Dämmelement kann daher mit regelmässig angeordneten Lagen gewickelt werden. Durch das rechteckförmige Verbindungselement wird bewirkt, dass das Dämmelement mit jeder Drehung bzw. mit jeder Wicklungslage zweimal mit geringem Biegeradius abgekantet wird. Sofern das Dämmelement beim Aufwickeln straff gespannt ist, resultieren Wicklungslagen mit hoher Dichte. Bei einem Unterbruch des Aufwicklungsvorgangs wird durch die mehrfachen Abkantungen verhindert, dass sich das aufgewickelte Dämmelement wieder lockern kann. Der durch das Verbindungselement und die Seitenwände gebildete Haspel erlaubt daher die Aufnahme einer maximalen Länge des Dämmelements. Das auf die Vorrichtung aufgewickelte Dämmelement bildet in der Folge nahezu einen Quader, der optimal gelagert werden kann. Sofern erfindungsgemässe Vorrichtungen mit darauf aufgewickelten Dämmelementen Seite an Seite angeordnet und übereinander gestapelt werden, so verbleiben zwischen den nahezu quaderförmigen Haspeln kaum Zwischenräume. Erfindungsgemässe Vorrichtung erlauben daher die Aufnahme von Dämmelementen mit hoher Dichte sowie die Lagerung derselben praktisch ohne Raumverlust.

Vorzugsweise sind die Seitenwände derart ausgestaltet, dass die zueinander parallelen Unter- und Oberseiten ineinander einführbare Profile, beispielsweise I- und U-Profile, aufweisen, so dass eine erste Vorrichtung mit den Seitenwänden auf die Oberseiten der Seitenwände einer zweiten Vorrichtung geschoben werden kann.

Die aus Metall, Kunststoff oder Holz gefertigten Seitenwände, in denen vorzugsweise der der Verbindung mit einer Transportvorrichtung dienende Öffnungen vorgesehen sind, können aus plattenförmigen Elementen oder Stäben gefertigt sein.

Vorzugsweise sind die Seitenwände je mit einer Montageplatte versehen, an denen das einteilige oder mehrteilige Verbindungselement befestigt ist. Beispielsweise wird die vorzugsweise rechteckförmige und aus Metall bestehende Montageplatte zentral an den Seitenwänden montiert, gegebenenfalls mit den Metallstäben verschweisst.

Das rechteckförmige Verbindungselement wird vorzugsweise durch zwei Verbindungsstangen gebildet, welche senkrecht zu den Seitenwänden stehen und die längeren Rechteckseiten des Verbindungselements definieren. Die Verbindungsstangen werden mit der Montageplatte fest und/oder lösbar verbunden. Vorzugsweise sind die Verbindungsstangen zumindest mit einer der Montageplatten lösbar verbunden, so dass eine Seitenwand von der Vorrichtung entfernt und die zweite Seitenwand mit dem gelösten Verbindungsstangen vom aufgewickelten Dämmelement abgezogen werden kann. Auf diese Weise kann das Dämmelement freigelegt werden, ohne dass es von der Vorrichtung abgewickelt werden muss.

Das einteilige oder mehrteilige Verbindungselement weist eine kürzere, dem Abstand der Verbindungsstangen entsprechende erste Seite und eine der Länge der Verbindungsstangen entsprechende zweite Seite auf, deren Längenverhältnis im Bereich von 1:2 bis 1:10 liegt. Vorzugsweise liegt das Verhältnis bei etwa 1:5. Das Seitenverhältnis wird in Abhängigkeit von den Abmessungen und Eigenschaften des Dämmelements festgelegt. Dabei ist bei der Wahl des Seitenverhältnisses darauf zu achten, dass die Abkantungen des Dämmelements ausgeprägt genug erfolgen, damit die oben beschriebene Wirkung erzielt wird.

Das Seitenverhältnis der zumindest annähernd rechteckförmigen Seitenwände ist derart an die Breite des Verbindungselements angepasst, dass vom Verbindungselement bis zum Rand der Seitenelemente zumindest annähernd dieselbe Wicklungshöhe verbleibt.

Vorzugsweise ist zwischen den Verbindungsstangen eine der Aufnahme einer Lagerwelle dienende Hohlwelle vorgesehen, deren Achse die Mittelpunkte der Seitenwände durchstösst und die durch die gegebenenfalls vorgesehenen Montageplatten der Seitenwände hindurch geführt ist. Die Achsen der Verbindungsstangen und der Hohlwelle liegen dabei vorzugsweise in einer Ebene, die senkrecht zu den Seitenwänden steht. Die Vorrichtung kann daher mittels der Lagerwelle drehbar gehalten werden, so dass das Abrollen des Dämmelements mit höherer Geschwindigkeit erfolgen kann.

Das Verbindungselement oder die Seitenwände sind vorzugsweise mit einem Kopplungselement verbunden, welches mit einem Endstück des Dämmelements koppelbar ist. Das Endstück des Dämmelements kann daher mit der Vorrichtung gekoppelt werden, wonach das Aufwickeln des Dämmelements bereits zu Beginn mit der gewünschten Zugkraft erfolgen kann.

Die Vorrichtung umfasst vorzugsweise eine mit Rädern und einem Handgriff versehene Transportvorrichtung, die es einem Anwender erlaubt, das aufgewickelte Dämmelement über kurze Distanzen zu transportieren, in denen ein Kraftfahrzeug nicht eingesetzt werden kann.

In einer ersten Ausgestaltung weist die Transportvorrichtung zwei Räder auf, die durch eine Radachse miteinander verbunden sind. Die Radachse trägt ein mit einem Haltegriff versehenes Fahrgestell, an dessen Unterseite wenigstens ein mit einem ersten Haltedorn versehener unterer Haltehebel und an dessen Oberseite wenigstens ein mit einem zweiten Haltedorn versehener oberer Haltehebel vorgesehen ist. Dabei sind die Haltehebel derart beabstandet und dimensioniert, dass zwischen den Haltehebeln der durch das Verbindungselement und die Seitenwände gebildete Haspel derart einsetzbar ist, dass die Hohlwelle von den Haltedornen senkrecht zur Radachse gehalten werden kann. Diese Transportvorrichtung ist in der Art eines Sackkarrens ausgebildet, der zur Aufnahme des senkrecht ausgerichteten Haspels geeignet ist.

In einer vorzugsweisen Ausgestaltung ist zumindest der obere Haltedorn verschiebbar gelagert. Der Haspel kann daher mit der ersten Seitenwand derart auf den unteren Haltehebel aufgesetzt werden, dass die Hohlwelle vom unteren Haltedorn erfasst wird und der Haspel mit der zweiten Seitenwand unter den oberen Haltehebel verschoben werden kann. Anschliessend wird der obere Haltedorn, der zurückgezogen wurde, um das Einschieben der zweiten Seitenwand zu ermöglichen, von oben in die Hohlwelle hinein verschoben, so dass diese nun von unten und von oben mittels der Haltedornen fixiert ist.

Diese Transportvorrichtung ist einfach ausgestaltet und erlaubt den Transport des Haspels über unwegsames Gelände. In einer vorzugsweisen Ausgestaltung erlaubt diese einfach aufgebaute Transportvorrichtung auch das Abrollen des schlauchförmigen Dämmelements.

In einer zweiten Ausgestaltung weist die Transportvorrichtung wenigstens drei, vorzugsweise vier Räder auf, die von Radachsen gehalten sind, welche mit einem Fahrgestell verbunden sind. Das Fahrgestell weist zwei zueinander komplementäre Fahrgestellteile auf, an denen je ein Hebel mittels einer Welle drehbar gehalten ist, der auf einer Seite der Welle einen mit einem gemeinsamen Haltegriff versehenen längeren Hebelteil und auf der anderen Seite der Welle einen mit einer Aufnahmegabel versehenen kürzeren Hebelteil aufweist. Die beiden Hebelteile sind dabei derart gegeneinander geneigt, dass die Hohlwelle oder die Lagerwelle beidseits mittels der Aufnahmegabeln greifbar und mittels der durch den Haltegriff miteinander verbundenen Hebel soweit anhebbar ist, dass der durch das Verbindungselement und die Seitenwände gebildete Haspel transportierbar und/oder drehbar ist. Die beiden Haltehebel und der gemeinsame Haltegriff bilden daher ein U-förmiges Werkzeug, das auf beiden Seiten der Transportvorrichtung drehbar gehalten ist. Mit dem kurzen Hebelteil kann die Hohlwelle oder die Lagerwelle erfasst und durch Krafteinwirkung auf den längeren Hebelteil angehoben werden. Die Ausgestaltung des Fahrgestells ist dabei von untergeordneter Bedeutung. Dieses kann eine rechteckförmige Struktur aufweisen, an der an zwei einander gegenüber liegenden Seiten die Wellen zur Befestigung der Haltehebel angeordnet sind.

In einer vorzugsweisen Ausgestaltung sind die Hebel, die den Haspel tragen, durch ein Arretierelement arretierbar. Beispielsweise ist ein verschiebbar gelagerter Bolzen vorgesehen, der über das längere Hebelteil geschoben werden kann.

In einer dritten Ausgestaltung weist die Transportvorrichtung zwei Räder auf, die von zwei voneinander getrennten Radachsen gehalten sind, welche mit Fahrgestell verbunden sind. Das Fahrgestell umfasst zwei zueinander komplementäre Fahrgestellteile, die je einen nach vorn und einen nach hinten ausgerichteten Tragarm aufweisen, die über Haltestangen miteinander verbunden sind und ein nach unten geöffnete U-Profil bilden. Die Haltestangen sind je mit vorzugsweise zwei Greifelementen versehen und derart beabstandet, dass der durch das Verbindungselement und die Seitenwände gebildete Haspel in die U-Profile aufnehmbar und mit den Greifelementen koppelbar ist. Diese Transportvorrichtung bildet daher insgesamt einen nach unten geöffneten U-Profil-förmigen Aufnahmekanal, der an die quaderförmigen Haspel angepasst und frontseitig sowie rückseitig mit den Greifelementen versehen ist, die sequenziell in die Aufnahmeöffnungen im Haspel einführbar sind, um diesen zu ergreifen und anzuheben. Das Fahrgestell ist vorzugsweise mit weiteren Strukturelementen, beispielsweise einem der Stabilisierung dienenden weiteren U-Profil verbunden. Die Tragarme sowie die weiteren Strukturelemente sind vorzugsweise direkt mit einem der Aufnahme der Radachsen dienenden Lagerkörper verbunden.

Mit dieser Transportvorrichtung kann ein in das nach unten geöffnete U-Profil eingeführter Haspel daher zuerst an der frontseitig vorgesehenen Seitenwand und anschliessend an der rückseitig vorgesehenen Seitenwand erfasst und angehoben werden. Dabei ist lediglich eine Schaukelbewegung erforderlich, bei der zuerst das frontseitige Ende der Transportvorrichtung und nach der dortigen Ankopplung der Greifelemente das rückseitige Ende der Transportvorrichtung nach unten geführt wird, um die entsprechenden Greifelemente anzukoppeln. Die Schaukelbewegung kann durch Bewegung des Haltegriffs, der über einen Hebel mit dem Fahrgestell verbunden ist, mit geringer Kraft ausgeführt werden.

Die erste, zweite und dritte Transportvorrichtung können mit verlängerbaren Strukturelementen versehen sein, welche die Anpassung der Transportvorrichtung an die jeweiligen Abmessungen eines Haspels ermöglichen. Beispielsweise werden die zueinander komplementären Fahrgestellteile durch Rohre miteinander verbunden, die teleskopisch ineinander einführbar und an beliebiger Lage fixierbar sind.

Beispielsweise ist wenigstens einer der Tragarme der dritten Transportvorrichtung und, sofern vorgesehen, wenigstens ein Strukturelement derart verlängerbar, dass die Transportvorrichtung an verschieden lange Haspel angepasst werden kann.

Insbesondere die dritte Transportvorrichtung kann auch zur Aufnahme weiterer vorzugsweise quaderförmiger Gegenstände verwendet werden, welche mit Öffnungen versehen sind, in die die Greifelemente eingeführt werden können.

Die Greifelemente sind an den Haltestangen vorzugsweise gegeneinander gerichtet und fest montiert oder drehbar und/oder seitlich verschiebbar.

Nachfolgend wird die Erfindung anhand von Zeichnungen näher erläutert. Dabei zeigt:
- Fig. 1: eine erfindungsgemässe Vorrichtung 1 mit zwei aus Metallstäben 111 gefertigten Seitenwänden 11, die je mit einer Montageplatte 14 versehen sind, die durch ein rechteckförmiges Verbindungselement 120 miteinander verbunden sind, das durch zwei Verbindungsstangen 12 gebildet wird, zwischen denen eine Hohlwelle 13 angeordnet ist;
- Fig. 2: die Vorrichtung von Figur 1 nach dem Entfernen einer Seitenwand 11;
- Fig. 3: einen senkrecht zu den Verbindungsstangen 12 und zur Hohlwelle 13 verlaufenden Schnitt durch die Vorrichtung 1, auf die ein schlauchförmiges Dämmelement 2 aufgewickelt ist;
- Fig. 4: den in Figur 3 eingezeichneten Schnitt A-A durch die Vorrichtung 1;
- Fig. 5: den Einsatz der schlauchförmigen Dämmelemente 2 von Figur 3;
- Fig. 6: eine erste Transportvorrichtung 3 in der Konfiguration eines Sackkarrens, die der Aufnahme der erfindungsgemässen Vorrichtung 1 von Figur 1 dient;
- Fig. 7 a-c: Schnittdarstellungen einer zweiten Transportvorrichtung 4 mit einer Hebelvorrichtung mit drehbar gelagerten Hebeln 45, mittels derer die Vorrichtung 1 von Figur 1 erfasst und angehoben werden kann;
- Fig. 8 a-b: die zweite Transportvorrichtung 4 der Figuren 7 a-c mit einer Hebelvorrichtung mit zwei am Fahrgestell 430 fest montierten Hebeln 45, mittels derer die Vorrichtung 1 von Figur 1 erfasst und angehoben werden kann;
- Fig. 9 a-d: Schnittdarstellungen einer dritten Transportvorrichtung 5, mittels der die Vorrichtung 1 von Figur 1 von oben erfasst und angehoben werden kann;
- Fig. 10: Schnittdarstellungen der Transportvorrichtung 5 der Figuren 9a-d sowie der Vorrichtung 1 von Figur 1; und
- Fig. 11: die Darstellung der erfindungsgemässen Vorrichtung 1 von Figur 4 mit stapelbaren Seitenwänden 11.

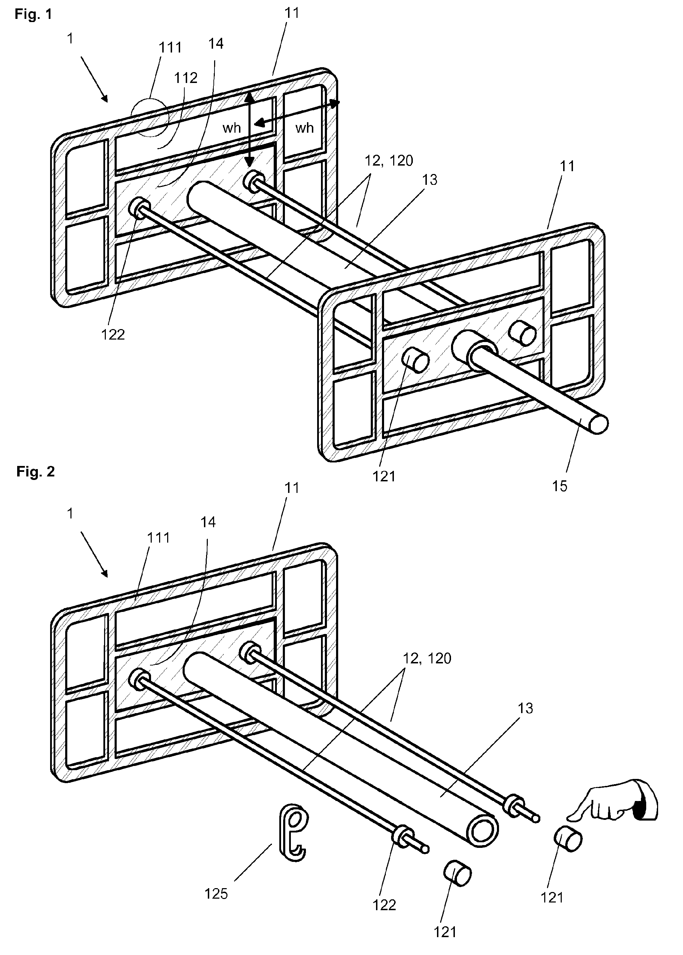

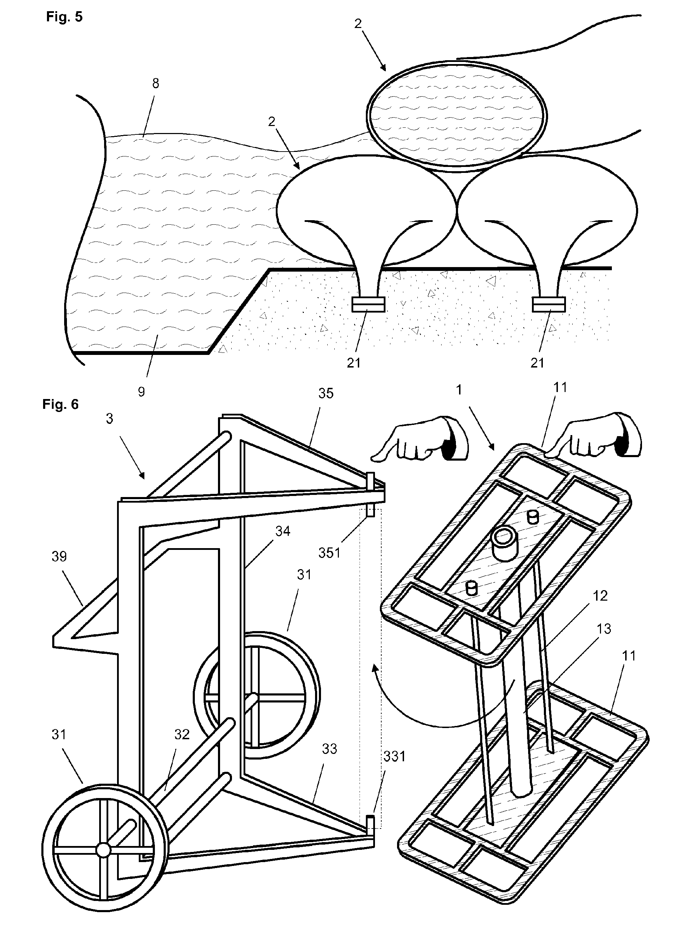

Figur 1 zeigt eine erfindungsgemässe Vorrichtung 1, die dem Aufwickeln eines schlauchförmigen Dämmelements 2 dient, wie es eingangs beschrieben wurde und in Figur 5 gezeigt ist. Die mit Wasser gefüllten Dämmelemente 2 weisen eine Querschnittfläche von 0.5 m² bis 1.5 m² und eine Länge von z.B. 20m auf. Wie dies gezeigt ist, kann ein Staukörper 9 durch die Anordnung von einem oder mehreren Dämmelementen 2 wirksam verstärkt werden.

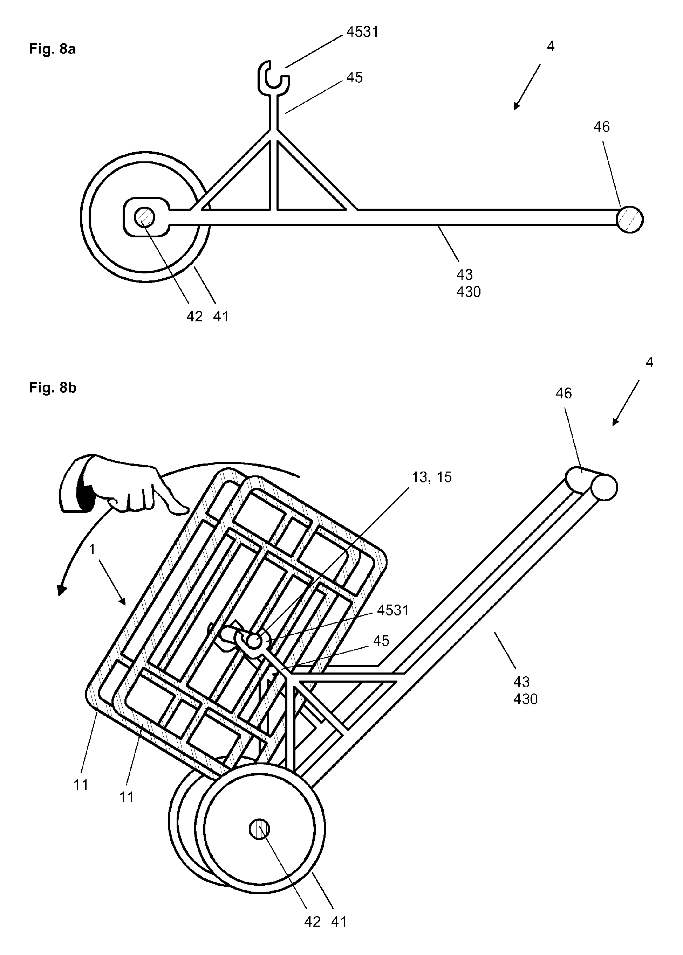

Die Vorrichtung 1 von Figur 1 besteht aus zwei aus Metallstäben 111 gefertigten Seitenwänden 11, die je mit einer aus Metall gefertigten Montageplatte 14 versehen sind. Zwischen den Metallstäben 111 sind Öffnungen 112 vorgesehen, in die Greifelemente 532, 542 einführbar sind (siehe Figur 8). Die beiden Montageplatten 14 sind durch zwei Verbindungsstangen 12 miteinander verbunden, die Flanschelemente 122 aufweisen und endseitig derart mit Befestigungselementen 121 verbindbar oder unlösbar verbunden sind, dass die Montageplatten 14 zwischen denen Flanschelementen 122 und den Befestigungselementen 121 fest gehalten sind. Die Befestigungselemente 121 können z.B. verschraubt, eingehängt oder auch fest verschweisst sein. Beispielsweise weisen die Verbindungsstangen 12 an jedem Ende ein Gewinde auf, welche mit den gegebenenfalls mit den Montageplatten 14 verschweissten Befestigungselementen 121 verschraubt werden können.

Durch die beiden mit den Montageplatten 14 verbundenen Verbindungsstangen 12 wird ein rechteckförmiges Verbindungselement 120 gebildet, dessen längere Seiten der Länge der Verbindungsstangen 12 und dessen kürzere Seiten dem Abstand der Verbindungsstangen 12 entsprechen. Die Länge der Verbindungsstangen 12 entspricht weiterhin der Breite der schlauchförmigen Dämmelemente 2, die vor dem Aufwickeln gegebenenfalls gefaltet werden. Die Breite des Verbindungselements 120 ist vorzugsweise in Abhängigkeit der Biegbarkeit der Dämmelemente 2 derart gewählt, so dass prägnante Abkantungen des Dämmelements 2 bzw. kleine Biegeradien entstehen, wenn dieses um eine Rechteckseite bzw. Kante herum geführt wird. Dadurch wird gewährleistet, dass das Dämmelement 2 optimal gespannt wird und sich in der Ruhelage der Vorrichtung 1 nicht selbsttätig löst.

Das Seitenverhältnis der zumindest annähernd rechteckförmigen Seitenwände 11 ist derart an die Breite des Verbindungselements 120 angepasst, dass vom Verbindungselement 120 bis zum Rand der Seitenelemente 11 zumindest annähernd dieselbe Wicklungshöhe wh verbleibt. Vorzugsweise verläuft dieselbe Wicklung des Dämmelements 2 entlang dem äussersten Rand der Seitenelemente 11, so dass der Raum optimal genutzt wird.

Zwischen den beiden Verbindungsstangen 12 ist ferner eine Hohlwelle 13 vorgesehen, in der eine Lagerwelle 15 gehalten ist. Nach dem Anheben der Lagerwelle 15 ist die Vorrichtung 1 daher drehbar, so dass das Dämmelement 2 widerstandsfrei abgewickelt werden kann.

In Figur 2 ist gezeigt, dass zumindest eine der Seitenwände 11 von den Verbindungsstangen 12 lösbar ist, so dass die Verbindungsstangen 12 mit der weiteren Seitenwand 11 vom aufgewickelten Dämmelement 2 abgezogen werden kann. Dies ist in den Fällen besonders hilfreich, wenn die Seitenwände 11 beim Abwickeln des Dämmelements 2 störend in Erscheinung treten. In Figur 2 ist ferner ein mit einem Endstück 21 des Dämmelements 2 koppelbares Kopplungselement 125 gezeigt, das auf eine der Verbindungsstangen 12 oder die Hohlwelle 13 aufgesetzt werden kann. Vor dem Aufwickeln des Dämmelements 2 wird daher das entsprechende Endstück 21, z.B. ein Einfüllstutzen oder ein verstärkter Halteriemen, in das Kopplungselement 125 eingehängt.

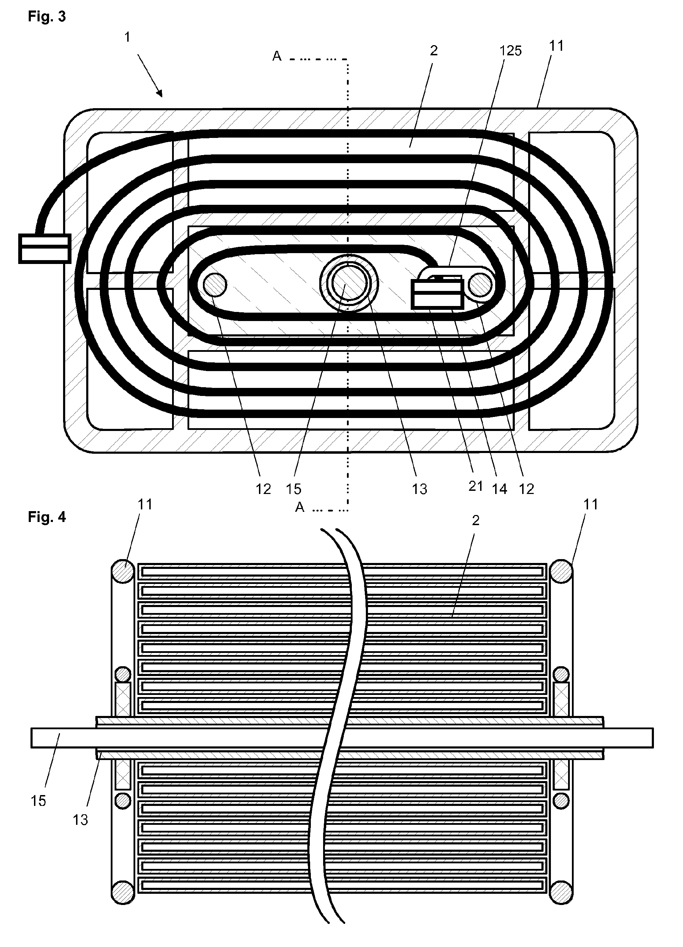

Figur 3 zeigt in Schnittdarstellung die Vorrichtung 1 mit dem aufgewickelten Dämmelement 2, dessen Endstück 21 vom Kopplungselement 125 gehalten ist. Es ist ersichtlich, dass die Windungen des Dämmelements 2 mit geringem Biegeradius um das von den Verbindungsstangen 12 gebildete Verbindungselement 120 geführt sind.

Figur 4 zeigt den in Figur 3 eingezeichneten und durch die Hohlwelle 13 verlaufenden Schnitt A-A durch die Vorrichtung 1.

Figur 6 zeigt eine in der Konfiguration eines Sackkarrens vorliegende erste Transportvorrichtung 3, die der Aufnahme und dem Transport der erfindungsgemässen Vorrichtung 1 dient.

Diese erste Transportvorrichtung 3 weist zwei Räder 31 auf, die durch eine Radachse 32 miteinander verbunden sind. Die Radachse 32, trägt ein mit einem Haltegriff 39 versehenes Fahrgestell 34, an dessen Unterseite zwei mit einem ersten Haltedorn 331 versehene untere Haltehebel 33 und an dessen Oberseite zwei mit einem zweiten Haltedorn 351 versehene obere Haltehebel 35 vorgesehen sind. Die Haltehebel 33, 35 sind derart voneinander beabstandet und dimensioniert, dass zwischen den Haltehebeln 33, 35 der durch das Verbindungselement 12 und die Seitenwände 11 gebildete Haspel 1 derart einsetzbar ist, dass die Hohlwelle 13 von den Haltedornen 331, 351 senkrecht zur Radachse 32 gehalten wird.

Der obere Haltedorn 351 ist verschiebbar gelagert, so dass die Vorrichtung 1 eingeführt und durch Absenken des Haltedorns 351 in die Hohlwelle 13 arretiert werden kann.

Zur Verbindung mit der Transportvorrichtung 3 wird die auf einer Seitenwand 11 stehende Vorrichtung 1 seitlich gekippt, so dass die unteren Haltehebel 33 mit dem ersten Haltedorn 331 unter die Hohlwelle 13 geführt werden können. Anschliessend wird die Vorrichtung 1 mit der anderen Seitenwand 11 unter die oberen Haltehebel 35 geführt und der zweite Haltedorn 351 in die Hohlwelle 13 hinein verschoben. Die beiden Haltedornen sind vorzugsweise drehbar gelagert, so dass sie die Hohlwelle 13 erfassen und drehen können. Sofern das Drehen der Vorrichtung 1 nicht erforderlich ist, so können die Haltehebel 33, 35 entsprechend kürzer ausgestattet sein. Mit dieser Transportvorrichtung 3 kann der Haspel 1 daher bequem transportiert werden.

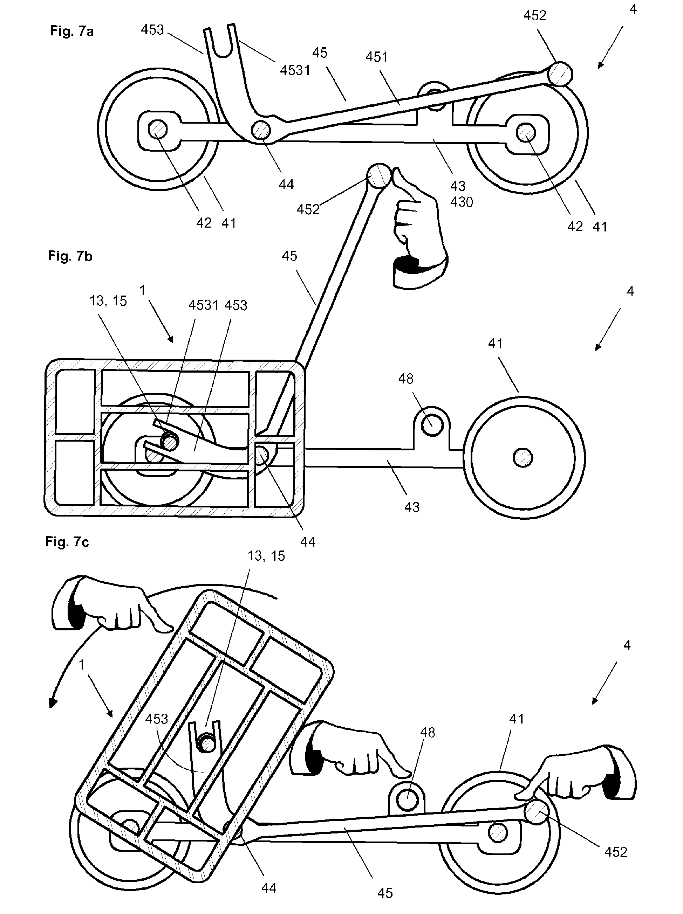

Die Figuren 7 a-c zeigen Schnittdarstellungen einer zweiten Transportvorrichtung 4, mittels der eine erfindungsgemässe Vorrichtung 1 noch einfacher erfasst und transportiert werden kann.

Die Transportvorrichtung 4 weist in dieser vorzugsweisen Ausgestaltung vier Räder 41 mit Radachsen 42 auf, welche mit einem Fahrgestell 430 verbunden sind. Das Fahrgestell 430 weist zwei zueinander komplementäre und miteinander verbundene Fahrgestellteile 43 auf, von denen nur einer in Schnittdarstellung gezeigt ist.

An jedem Fahrgestellteil ist ein Hebel 45 mittels einer Welle 44 drehbar gehalten ist. Auf einer Seite der Welle 44 weist der Hebel 45 ein längeres Hebelteil 451 mit einem für beide Fahrgestellteile gemeinsamen Haltegriff 452 auf. Auf der anderen Seite der Welle 44 weist der Hebel 45 ein kürzeres Hebelteil 453 auf, welches mit einer Aufnahmegabel 4531 versehen ist. Die beiden Hebelteile 451, 453 sind dabei derart gegeneinander geneigt, dass die in die Vorrichtung 1 eingeführte Lagerwelle 15 mittels der Aufnahmegabeln 4531 beidseits greifbar und mittels der durch den gemeinsamen Haltegriff 452 miteinander verbundenen Hebel 45 soweit anhebbar ist, dass der durch das Verbindungselement 12 und die Seitenwände 11 gebildete Haspel drehbar ist.

Zwischen den beiden zueinander komplementären Fahrgestellteilen sind Verbindungsprofile und Strukturelemente vorgesehen, welche die beiden Hälften stabil miteinander verbinden und derart dimensioniert sind, dass sie für die Aufnahme und gegebenenfalls Drehung der Vorrichtung 1 nicht hinderlich sind. Beispielsweise sind die Hälften durch nach unten geöffnete U-Profile miteinander verbunden.

Figur 7a zeigt die zweite Transportvorrichtung 4 allein. In Figur 7b ist die erfindungsgemässe Vorrichtung 1 von Figur 1 mit der Hohlwelle 13 und der Lagerwelle 15 schematisch gezeigt, die von den Aufnahmegabeln 4531 erfasst wird. Dazu wurden die Hebel 45 mit dem Haltegriff 452 um die Welle 44 soweit gedreht, bis die Aufnahmegabeln 4531 auf der Höhe der Lagerwelle 15 lagen. In Figur 7c wurden die Hebel 45 mit dem Haltegriff 452 um die Welle 44 in eine Stellung gedreht, in der die Vorrichtung 1 frei um die Lagerwelle 15 drehbar ist. In dieser Stellung wurden die Hebel 45 mittels Bolzen 48 arretiert, die im Fahrgestell 43 verschiebbar gelagert sind.

Alternativ kann die zweite Transportvorrichtung 4 auch nur zwei Räder 41 aufweisen. Deren Radachsen 42 werden vorzugsweise derart angeordnet, dass der Schwerpunkt des getragenen Haspels 1 zumindest annähernd senkrecht über diesen liegt. Die Last des Haspels 1 wird daher im Wesentlichen von den beiden Rädern 41 getragen, weshalb die weiteren Räder 41 nicht erforderlich, gegebenenfalls sogar hinderlich sind. Die mit nur zwei Rädern 41 versehene zweite Transportvorrichtung 4 kann daher in der Art eines Schubkarrens verfahren werden, wobei eine erhöhte Manövrierfähigkeit gegeben ist.

Die Figuren 8a und 8b zeigen die zweite Transportvorrichtung 4 der Figuren 7 a-c in einer vorzugsweisen Ausgestaltung, in der die Hebelvorrichtung zwei am Fahrgestell 430 fest montierte Hebel 45 aufweist, mittels der die Hohlwelle 13 oder die Lagerwelle 15 erfasst und die Vorrichtung 1 bzw. der Haspel (schematisch gezeigt) angehoben werden kann. Zudem sind nur zwei Räder 41 vorgesehen, welche die Last tragen. Die beiden zueinander komplementären Fahrgestellteile 43 sind dabei durch die gemeinsame Radachse 42 sowie durch den gemeinsamen Haltegriff 46 miteinander verbunden. Ferner können die beiden Fahrgestellteile 43 mittels weiterer Strukturelemente miteinander verbunden sein. Die Strukturelemente werden bei allen Transportvorrichtungen 3, 4 und 5, die alle strukturell ähnlich sind, jedoch derart vorgesehen, dass der für die Vorrichtung 1 erforderliche Freiraum nicht beschränkt wird.

Zur Aufnahme des Haspels 1 wird das Fahrgestell 430 um die Radachse 42 gedreht, bis die Hohlwelle 13 oder die Lagerwelle 15 von den Aufnahmegabeln 4531 erfasst werden kann. Anschliessend wird die Radachse 42 beispielsweise mit einem Fuss fixiert und das Fahrgestell 430 durch Ziehen am Haltegriff 46 zurück gedreht, bis der Schwerpunkt der Vorrichtung 1 senkrecht über der Radachse 42 steht. In dieser Position, die in Figur 8b gezeigt ist, wird die Last der Vorrichtung 1 vollständig von den Rädern 41 aufgenommen. Die zweite Transportvorrichtung 4 kann in dieser vorzugsweisen Ausgestaltung daher wie ein Schubkarren oder Sackkarren verfahren werden. Die Länge der Hebel 45 ist vorzugsweise derart gewählt, dass die Vorrichtung 1 selbst dann drehbar gehalten ist, wenn der Haltegriff 46 auf den Boden aufgesetzt wird. Am Haltegriff 46 kann ferner ein Schwenkrad vorgesehen sein.

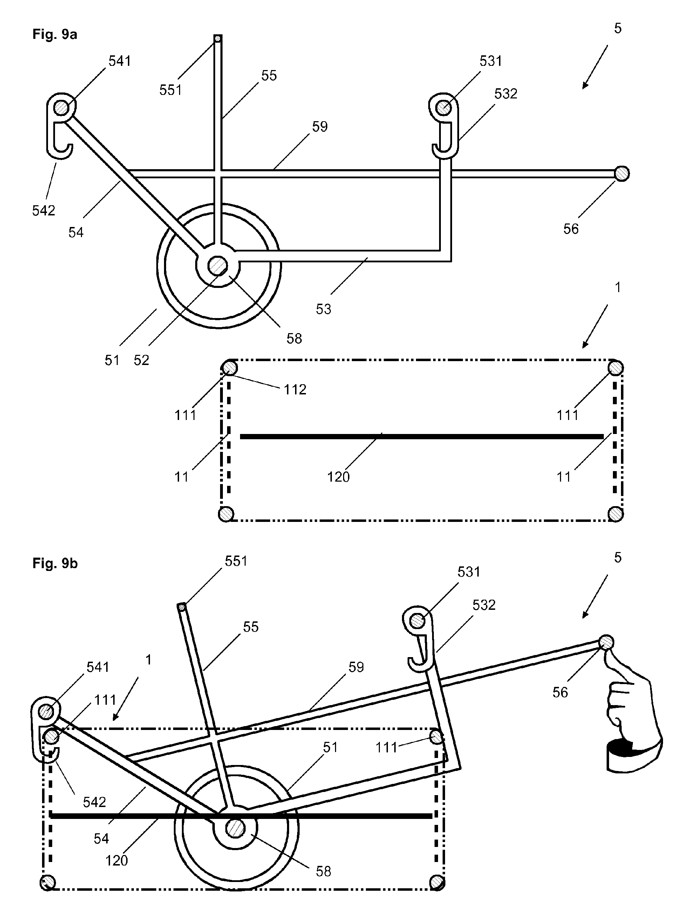

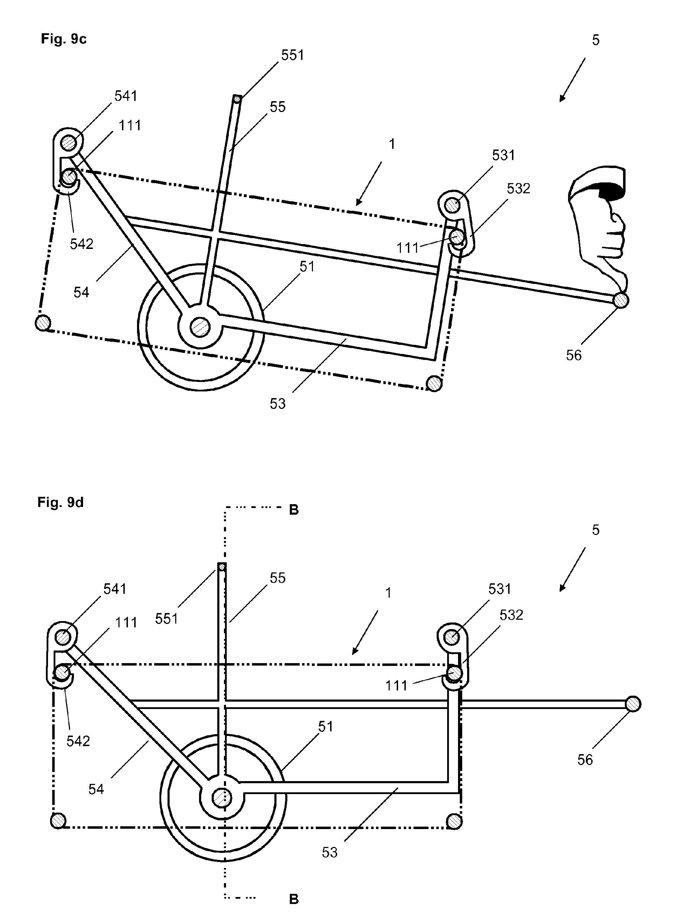

Die Figuren 9 a-d zeigen schematisch und in Schnittdarstellung eine dritte Transportvorrichtung 5, mittels der eine erfindungsgemässe Vorrichtung 1 von oben erfasst und abtransportiert werden kann.

Die dritte Transportvorrichtung 5 weist zwei Räder 51 mit voneinander getrennten Radachsen 52 auf, welche mit einem Fahrgestell 53, 54, 55 verbunden sind, welches zwei zueinander komplementäre und miteinander verbundene Fahrgestellteile umfasst, von denen nur eines in Schnittdarstellung gezeigt ist.

Jedes der Fahrgestellteilen weist einen nach vorn und einen nach hinten ausgerichteten Tragarm 53, 54 auf, die über Haltestangen 531, 541 miteinander verbunden sind und die nach unten geöffnete U-Profile bilden. Die Haltestangen 531, 541 sind je mit wenigstens einem Greifelement 532, 542 versehen und derart beabstandet, dass der durch das Verbindungselement 12 und die Seitenwände 11 gebildete Haspel in die U-Profile aufnehmbar und mit den Greifelementen 532, 542 koppelbar ist. Vorzugsweise sind die Haltestangen 531, 541 und wenigstens einer der Tragarme 53, 54 verlängerbar, so dass die Transportvorrichtung 5 an verschiedene Haspel 1 oder weitere zu transportierende Gegenstände angepasst werden kann.

Vorzugsweise sind je zwei gegeneinander gerichtete und fest montierte oder drehbare und/oder seitlich verschiebbare Greifelemente 532, 542 vorgesehen, die an die Vorrichtung 1 anpassbar sind.

In den Figuren 9 a-d ist nur die eine Hälfte der dritten Transportvorrichtung 5 gezeigt, die in Längsrichtung aufgeschnitten wurde. Die nicht gezeigte zweite Hälfte der Transportvorrichtung 5 ist komplementär dazu ausgebildet. Zwischen den beiden zueinander komplementären Hälften der Transportvorrichtung 4 sind nebst den Haltestangen 531, 541 Verbindungsprofile und Strukturelemente 55, 551 vorgesehen, welche die beiden Hälften stabil miteinander verbinden und derart dimensioniert sind, dass sie für die Aufnahme der Vorrichtung 1 nicht hinderlich sind.

Figur 8a zeigt die dritte Transportvorrichtung 5 und den Haspel 1 voneinander getrennt. In Figur 8b wurde die Transportvorrichtung 5 über den Haspel 1 gefahren und mittels des Handgriffs 56 vorne soweit abgesenkt, dass die an der vorderen Haltestange 541 vorgesehenen Greifelemente 542 in die Öffnungen 112 in der einen Seitenwand 11 eingreifen können. In Figur 8c wurde die Rückseite der Transportvorrichtung 5 so weit abgesenkt, bis die an der hinteren Haltestange 531 vorgesehenen Greifelemente 532 in die Öffnungen 112 in der anderen Seitenwand 11 eingreifen können. Figur 8d zeigt die waagrecht ausgerichtete dritte Transportvorrichtung 5 mit dem gehaltenen Haspel 1.

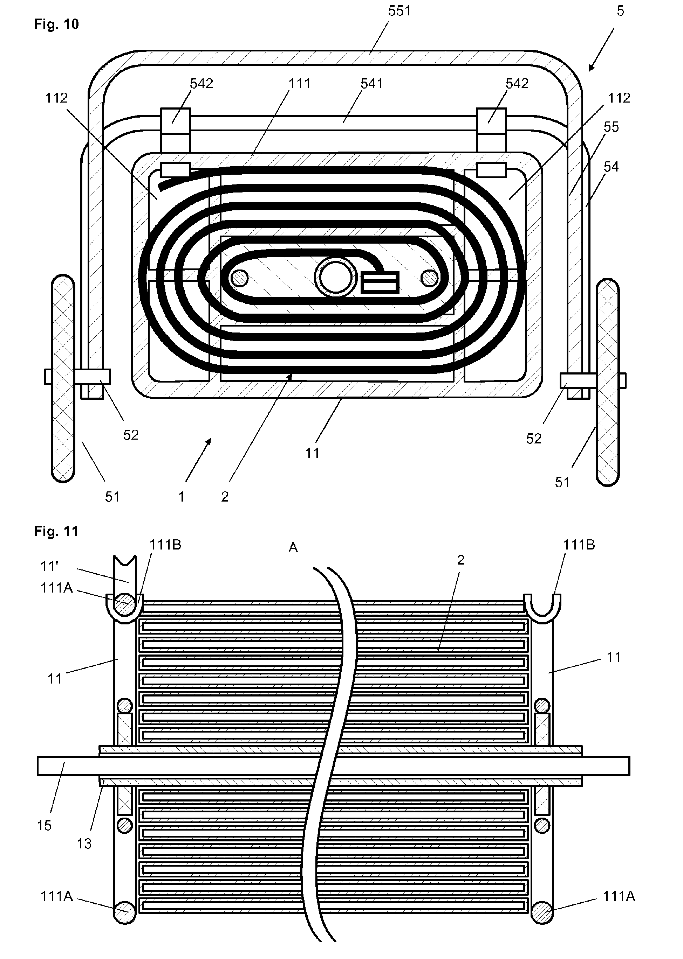

Figur 10 zeigt Schnittdarstellungen der Transportvorrichtung 5 von Figur 8a-d sowie des gehaltenen Haspels 1. Gezeigt sind die nach hinten gerichteten Tragarme 54 und die hintere Haltestange 541 mit den Greifelementen 542, welche den Haspel 1 an einer Seitenwand 11 halten. Ferner ist ein nach unten geöffnetes U-Profil 55, 551 gezeigt, welches der Stabilisierung des Fahrgestells dient.

Figur 11 zeigt die Darstellung der erfindungsgemässen Vorrichtung 1 von Figur 4 mit stapelbaren Seitenwänden 11, die an gegenüber liegenden Seiten zueinander korrespondierende Profilelemente 111A, 111B aufweisen. Es ist gezeigt, dass verschiedene Seitenwände 11, 11' übereinander stapelbar sind, wobei zueinander korrespondierende Profilelemente 111A, 111B ineinander eingreifen. Erfindungsgemässe Vorrichtungen 1 bzw.

Haspel können daher in einfacher Weise raumsparend gelagert werden.

Die erfindungsgemässen Vorrichtungen bzw. Haspel 1 können auch in Transportbehälter oder Lagersysteme verschoben werden. Beispielsweise werden Profilrampen eingesetzt, um die Haspel 1 auf Fahrzeuge zu verschieben oder von diesen zu entladen.

Beim Einsatz der Dämmelemente 2 können die Haspel 1 auch als Halter für Absperrbänder verwendet werden.

Weiter kann die erste, zweite und dritte Transportvorrichtung 3, 4 bzw. 5 mit einem Haltegriff sowie mit Bremsen und/oder auch mit wenigstens einem Antrieb versehen sein, mittels derer die Räder 41 und/oder der Haspel 1 angetrieben und gebremst werden kann.

Anstelle von Rädern 41 können die Transportvorrichtungen 3, 4 und 5 auch mit Kufen versehen sein.

Ferner sind die Transportvorrichtungen 3, 4 und 5 auch mit konventionell ausgestalteten Haspeln oder auch weiteren Gegenständen einsetzbar, die an Wellen oder Öffnungen erfasst werden können.

## Patentansprüche

**1.** Vorrichtung (1) zum Aufwickeln und Halten eines schlauchförmigen Dämmelements (2) mit zwei Seitenwänden (11) die durch ein Verbindungselement (120) miteinander verbunden sind, **dadurch gekennzeichnet, dass** die Seitenwände (11) eine Rechteckform aufweisen und das einteilige oder mehrteilige Verbindungselement (120) je ein Rechteck bildet, das senkrecht zu den beiden Seitenwänden (11) steht und parallel zu einem Rand oder Randelement (111) der Seitenwände (11) ausgerichtet ist.

**2.** Vorrichtung (1) nach Anspruch 1, **dadurch gekennzeichnet, dass** die aus Metall, Kunststoff oder Holz gefertigten Seitenwände (11) plattenförmig ausgestaltet und mit Öffnungen (112) versehen sind oder dass die Seitenwände (11) durch miteinander verbundene Stäbe (111) gebildet sind, zwischen denen Öffnungen (112) vorgesehen sind.

**3.** Vorrichtung (1) nach Anspruch 1 oder 2, **dadurch gekennzeichnet, dass** die Seitenwände (11) je mit einer vorzugsweise rechteckförmigen Montageplatte (14) versehen sind, an denen das einteilige oder mehrteilige Verbindungselement (120) befestigt ist und/oder das Verbindungselement (120) durch zwei Verbindungsstangen (12) gebildet ist, welche senkrecht zu den Seitenwänden (11) stehen und die längeren Rechteckseiten des rechteckförmigen Verbindungselements (120) definieren.

**4.** Vorrichtung (1) nach Anspruch 3, **dadurch gekennzeichnet, dass** zwischen den Verbindungsstangen (12) eine der Aufnahme einer Lagerwelle (15) dienende Hohlwelle (13) vorgesehen ist, deren Achse die Mittelpunkte der Seitenwände (11) durchstösst und die durch die Montageplatten (14) der Seitenwände (11) hindurch geführt ist.

**5.** Vorrichtung (1) nach Anspruch 3 oder 4, **dadurch gekennzeichnet, dass** die Verbindungsstangen (12) und die Hohlwelle (13) zumindest von einer der Montageplatten (14) lösbar sind und/oder das Verbindungselement (120) oder die Seitenwände (11) ein Kopplungselement (125) aufweisen, welches mit einem Endstück (21) des Dämmelements (2) koppelbar ist.

**6.** Vorrichtung (1) nach einem der Ansprüche 1-5, **dadurch gekennzeichnet, dass** die Seitenwände (11) auf den einander gegenüberliegenden Seiten (111A, 111B) in zueinander korrespondierende Profile aufweisen, welche erlauben, Vorrichtungen (1) der Art übereinander zu stapeln, dass die zueinander korrespondierende Profile von zwei Seiten (111A, 111B) ineinander eingreifen.

**7.** Vorrichtung (1) nach Anspruch 6, **dadurch gekennzeichnet, dass** die durch das einteilige oder mehrteilige Verbindungselement (120) bzw. durch die Verbindungsstangen (12) gebildete Rechteck eine kürzere, dem Abstand der Verbindungsstangen (12) entsprechende erste Seite und eine der Länge der Verbindungsstangen (12) entsprechende zweite Seite aufweist, deren Längenverhältnis vorzugsweise im Bereich von 1:2 bis 1:10 liegt und dass das Seitenverhältnis der zumindest annähernd rechteckförmigen Seitenwände (11) derart an die Breite des Verbindungselements (120) angepasst ist, dass vom Verbindungselement (120) bis zum Rand der Seitenelemente (11) zumindest annähernd dieselbe Wicklungshöhe (wh) verbleibt.

**8.** Vorrichtung (1) nach einem der Ansprüche 1-7, **dadurch gekennzeichnet, dass** eine erste Transportvorrichtung (3) mit zwei Rädern (31) vorgesehen ist, die durch eine Radachse (32) miteinander verbunden sind, welche ein mit einem Haltegriff (39) versehenes Fahrgestell (34) aufweist, an dessen Unterseite wenigstens ein mit einem ersten Haltedorn (331) versehener unterer Haltehebel (33) und an dessen Oberseite wenigstens ein mit einem zweiten Haltedorn (351) versehener oberer Haltehebel (35) vorgesehen ist, wobei die Haltehebel (33, 35) derart beabstandet und dimensioniert sind, dass zwischen den Haltehebeln (33, 35) der durch das Verbindungselement (12) und die Seitenwände (11) gebildete Haspel derart einsetzbar ist, dass die Hohlwelle (13) von den Haltedornen (331, 351) senkrecht zur Radachse (32) gehalten werden kann.

**10.** Vorrichtung (1) nach Anspruch 9, **dadurch gekennzeichnet, dass** zumindest der obere Haltedorn (351) verschiebbar gelagert ist.

**11.** Vorrichtung (1) nach einem der Ansprüche 1-7, **dadurch gekennzeichnet, dass** eine zweite Transportvorrichtung (4) mit wenigstens zwei Rädern (41) vorgesehen ist, die von Radachsen (42) gehalten sind, welche mit einem Fahrgestell (430) verbunden sind, welches zwei zueinander komplementäre Fahrgestellteile (43) aufweist, an denen je ein Hebel (45) fest oder drehbar gehalten ist, der mit einer Aufnahmegabel (4531) versehen ist, wobei mittels der Aufnahmegabeln (4531) die Hohlwelle (13) oder die Lagerwelle (15) greifbar und durch Drehung des Fahrgestells (430) bzw. durch Drehung der Hebel (45) soweit anhebbar ist, dass der durch das Verbindungselement (12) und die Seitenwände (11) gebildete Haspel transportierbar und/oder drehbar ist.

**12.** Vorrichtung (1) nach Anspruch 11, **dadurch gekennzeichnet, dass** die beiden Hebel (45) mittels je einer an den zueinander komplementären Fahrgestellteilen (43) vorgesehenen Wellen (44) drehbar gehalten sind und auf einer Seite der zugehörigen Welle (44) einen mit einem gemeinsamen Haltegriff (452) versehenen längeren Hebelteil (451) und auf der anderen Seite der Welle (44) einen mit der Aufnahmegabel (4531) versehenen kürzeren Hebelteil (453) aufweist, wobei die beiden Hebelteile (451, 453) derart gegeneinander geneigt sind, dass die Hohlwelle (13) oder die Lagerwelle (15) beidseits mittels der Aufnahmegabeln (4531) greifbar und mittels der durch den Haltegriff (452) miteinander verbundenen Hebel (45) soweit anhebbar ist, dass der durch das Verbindungselement (12) und die Seitenwände (11) gebildete Haspel transportierbar und/oder drehbar ist.

**13.** Vorrichtung (1) nach Anspruch 12, **dadurch gekennzeichnet, dass** die mittels der Welle (44) drehbar gelagerten Hebel (45) durch ein Arretierelement (48) in der Position arretierbar sind, in der sie den Haspel (1) tragen.

**14.** Vorrichtung (1) nach einem der Ansprüche 1-7, **dadurch gekennzeichnet, dass** eine dritte Transportvorrichtung (5) mit zwei Rädern (51) vorgesehen ist, die von zwei voneinander getrennten Radachsen (52) gehalten sind, welche mit einem Fahrgestell (53, 54, 55) verbunden sind, welches zwei zueinander komplementäre Fahrgestellteile umfasst, die je einen nach vorn und einen nach hinten ausgerichteten Tragarm (53, 54) aufweisen, welche über Haltestangen (531, 541) miteinander verbunden sind und nach unten geöffnete U-Profile bilden, wobei die Haltestangen (531, 541) je mit wenigstens einem Greifelement (532, 542) versehen und derart beabstandet sind, dass der durch das Verbindungselement (12) und die Seitenwände (11) gebildete Haspel in die U-Profile aufnehmbar und mit den Greifelementen (532, 542) koppelbar ist.

**15.** Vorrichtung (1) nach Anspruch 13, **dadurch gekennzeichnet, dass** wenigstens einer der Tragarme (53, 54) und gegebenenfalls wenigstens ein der Stabilisierung dienendes weiteres Strukturelement (55) verlängerbar sind und/oder dass an den Haltestangen (531, 541) je zwei vorzugsweise gegeneinander gerichtete und fest montierte oder drehbare und/oder seitlich verschiebbare Greifelemente (532, 542) vorgesehen sind.
